# EUROPÄISCHE PATENTSCHRIFT

(11) **EP 3 492 321 B1**
(45) Veröffentlichungstag und Bekanntmachung des Hinweises auf die Patenterteilung: **16.06.2021**
(21) Anmeldenummer: 18207437.7
(22) Anmeldetag: 21.11.2018
(51) Int. Cl.: B60R 19/48, B60D 1/60

(54) **VERKLEIDUNGSTEIL FÜR EIN KRAFTFAHRZEUG UND DESSEN VERWENDUNG**
TRIM PANEL FOR A MOTOR VEHICLE AND ITS USE
ÉLÉMENT D'HABILLAGE POUR UN VÉHICULE AUTOMOBILE ET SON UTILISATION

(30) Priorität: 01.12.2017 DE 102017128547
(43) Veröffentlichungstag der Anmeldung: 05.06.2019
(73) Patentinhaber: MAN Truck & Bus SE, 80995 München (DE)
(72) Erfinder: Weber, Maximillian, 80798 München (DE); Gasteiger, Martin, 86556 Kühbach (DE); Mayer, Florian, 83026 Rosenheim / Eising (DE)
(74) Vertreter: v. Bezold & Partner Patentanwälte - PartG mbB

(56) Entgegenhaltungen:
- EP-A1- 0 885 776
- EP-A1- 1 619 077
- EP-A2- 2 428 410
- DE-U1- 8 709 772

## Beschreibung

Die Erfindung betrifft ein Verkleidungsteil für ein Kraftfahrzeug und eine Verwendung des Verkleidungsteils.

Die gestiegenen Anforderungen an das Aussehen von Kraftfahrzeugen führen zu einem vermehrten Einsatz von Blenden/Abdeckungen und Designbauteilen (Gestaltungsurteile). Die Anforderungen an das Aussehen sind hierbei nicht nur bei Personenkraftwagen, sondern auch bei Nutzfahrzeugen, wie beispielsweise Lastkraftwagen, gestiegen.

Verkleidungsteile müssen hierbei jedoch so gestaltet sein, dass die Zugänglichkeit zu Funktionsbauteilen des Kraftfahrzeugs gewahrt bleibt. Ein Beispiel für ein derartiges Funktionsbauteil ist der entnehmbare Vorsteckbolzen in einem Fangmaul bzw. Zugmaul eines Frontstoßfängers eines Nutzfahrzeugs, dessen Zugänglichkeit durch Verkleidungsteile nicht beeinträchtigt werden darf. Demzufolge können Einschränkungen bezüglich der Gestaltung der Verkleidungsteile bestehen und/oder die Notwendigkeit, das Verkleidungsteil zu demontieren, um Zugang zu dem entsprechenden Funktionsbauteil zu erlangen. Die Demontage kann umständlich sein und das Verkleidungsteil kann hierbei verschmutzen, beschädigt werden oder verloren gehen.

Die DE 87 09 772 U1 offenbart eine Kuppelvorrichtung eines Kraftfahrzeugs, die durch ein selten- und/oder höhenverstellbares Nummern- bzw. Kraftfahrzeug-Kennzeichnungsschild abgedeckt ist, das für einen Schleppbetrieb des Kraftfahrzeugs bei frei zugänglicher Kuppelvorrichtung in eine Seiten- oder Höhenlage verstellt werden kann.

Die EP 2 428 410 A2 offenbart einen Kennzeichen-Träger zum Tragen eines Kennzeichens eines Lastenträger-Systems für ein Kraftfahrzeug.

Die EP 0 885 776 A1 offenbart eine Abdeckungsanordnung für einen Teil eines Fahrzeugs, die einen Fahrzeugteil umfasst, bei dem es sich um einen Fahrzeugstoßfänger handeln kann, der eine von der Vorderseite des Fahrzeugteils zurückgesetzte Platte aufweist. Die Platte weist eine Öffnung auf, um beispielsweise Zugang zu einer Anordnung zum Befestigen eines Schleppkabels zu ermöglichen. Zum Abdecken der Öffnung ist eine Abdeckung vorgesehen, und die Abdeckung ist zwischen einer ersten geschlossenen Position, in der sie die Öffnung abdeckt, und einer zweiten offenen Position, in der die Öffnung zugänglich ist, bewegbar. In der zweiten Position kann die Abdeckung als Stufe verwendet werden. An einer vorbestimmten Zwischenposition ist die Abdeckung von der Verbindung mit dem Fahrzeugteil entfernbar. Die EP 1 619 077 A1 offenbart eine Laderaumstruktur umfassend einen Laderaum, der in einem hinteren Teil eines Fahrzeugs vorgesehen ist, ein Paar Seitenwände, eine hintere Ladetafel (Laderaumtrennelement) und eine Freigabevorrichtung mit einem Griff, der an einer Montagefläche der Ladung vorgesehen ist.

Der Erfindung liegt die Aufgabe zu Grunde, ein verbessertes Verkleidungsteil zu schaffen, das eine große Gestaltungsfreiheit und eine einfache Handhabung hinsichtlich der Erlangung der Zugänglichkeit zu einem Funktionsbauteil des Kraftfahrzeug ermöglicht.

Die Aufgabe wird gelöst durch ein Verkleidungsteil und eine Verwendung des Verkleidungsteils gemäß den unabhängigen Ansprüchen. Vorteilhafte Weiterbildungen sind in den abhängigen Ansprüchen und der Beschreibung angegeben.

Das Verkleidungsteil ist für ein Kraftfahrzeug, insbesondere Nutzfahrzeug, geeignet. Insbesondere ist das Verkleidungsteil zumindest zum teilweisen Abdecken eines Funktionsbauteils (zum Beispiel eines Steckbolzens in einem Fangmaul) des Kraftfahrzeugs geeignet. Das Verkleidungsteil weist einen ersten Anbringungsbereich auf, der dazu ausgebildet ist, das Verkleidungsteil abnehmbar an dem Kraftfahrzeug in einer Gebrauchslage (des Verkleidungsteils für den normalen Fahrbetrieb des Kraftfahrzeugs) anzubringen. Das Verkleidungsteil weist einen zweiten Anbringungsbereich auf, der separat zum ersten Anbringungsbereich vorgesehen und dazu ausgebildet ist, das Verkleidungsteil
abnehmbar an dem Kraftfahrzeug zum temporären Sichern des Verkleidungsteils außerhalb der Gebrauchslage anzubringen.

Das Verkleidungsteil kann somit von dem Benutzer auf einfache Weise von dem Kraftfahrzeug abgenommen werden, um Zugang zu dem Funktionsbauteil zu erlangen. Um nach dem Abnehmen des Verkleidungsteils die Hände wieder frei zu haben, kann das Verkleidungsteil in einer anderen Position außerhalb der Gebrauchslage wieder an dem Kraftfahrzeug angebracht werden. Damit ist es nicht notwendig, das Verkleidungsteil auf dem Boden abzulegen, wo es verschmutzt, vergessen oder beschädigt werden kann. Es ist auch nicht notwendig, das Verkleidungsteil umständlich an einer sicheren Position, zum Beispiel im Fahrerhaus, abzulegen. Stattdessen kann das Verkleidungsteil auf einfache Art und Weise mittels des zweiten Anbringungsbereichs wieder am Kraftfahrzeug außerhalb der Gebrauchslage angebracht werden. Damit kann der Benutzer wieder schnell seine Hände frei haben, um das Funktionsbauteil, dessen Zugänglichkeit zuvor von dem Verkleidungsteil beeinträchtigt wurde, bestimmungsgemäß zu verwenden.

Bei dauerhafter Anbringung mittels eines nur zur temporären Anbringung vorgesehenen Anbringungsbereichs können zudem auch gesetzliche und/oder berufsgenossenschaftliche Auflagen verletzt werden. Stattdessen erkennt der Benutzer unmittelbar, dass der zweite Anbringungsbereich lediglich zum temporären Sichern des Verkleidungsteils außerhalb der Gebrauchslage am Kraftfahrzeug vorgesehen ist. Außerdem können zusätzliche mechanische Befestigungen, wie Einhaken, Einfädeln oder Verbindungsbänder (Schnur usw.) an einem Verkleidungsteil mit Blick auf die Gestaltung des Verkleidungsteils nur schwer realisierbar sein. Ein weiterer Nachteil mechanischer Befestigungen kann darin liegen, dass ein hohes Risiko der Beschädigung des Verkleidungsteils selbst oder umgebender Bauteile bestehen kann (zum Beispiel Lackschäden durch ein an einer Schnur herumbaumelndes Verkleidungsteil).

In einem weiteren bevorzugten Ausführungsbeispiel ist der zweite Anbringungsbereich dazu ausgebildet, das Verkleidungsteil frei positionierbar und/oder variabel positionierbar an dem Kraftfahrzeug, insbesondere einem Stoßfänger des Kraftfahrzeugs, anzubringen. Dies erhöht die Flexibilität und verringert den Zeitaufwand.

In einem Ausführungsbeispiel ist der erste Anbringungsbereich dazu ausgebildet, das Verkleidungsteil mechanisch, insbesondere mittels einer formschlüssigen, kraftschlüssigen und/oder reibschlüssigen, mechanischen Verbindung, an dem Kraftfahrzeug anzubringen. Dies ermöglicht eine sichere Verbindung in der Gebrauchslage für den normalen Fahrbetrieb des Kraftfahrzeugs.

In einem weiteren Ausführungsbeispiel ist das Verkleidungsteil als eine Zierblende oder eine Zierabdeckung ausgebildet.

In einer Ausführungsform ist das Verkleidungsteil dazu ausgebildet, in der Gebrauchslage ein Funktionsbauteil des Kraftfahrzeugs und/oder einen Zugang zu einem Funktionsbauteil des Kraftfahrzeugs zumindest teilweise zu verdecken und/oder zumindest teilweise zu blockieren. In einer weiteren Ausführungsform weist der zweite Anbringungsbereich einen Magneten zum magnetischen Anheften des Verkleidungsteils an dem Kraftfahrzeug auf. Damit kann das Verkleidungsteil flexibel an den metallischen Elementen des Kraftfahrzeugs, zum Beispiel des Frontstoßfängers, lösbar außerhalb der Gebrauchslage angebracht werden.

In einer weiteren Ausführungsform ist der zweite Anbringungsbereich dazu ausgebildet, das Verkleidungsteil stoffschlüssig mit dem Kraftfahrzeug zu verbinden. Beispielsweise kann der zweite Anbringungsbereich eine Klebefolie zum lösbaren Ankleben des Verkleidungsteils an dem Kraftfahrzeug aufweisen. Somit kann das Verkleidungsteil flexibel an allen Außenflächen des Kraftfahrzeugs lösbar außerhalb der Gebrauchslage angebracht werden.

In einer Ausführungsvariante weist der zweite Anbringungsbereich mindestens einen Saugnapf zum lösbaren Anbringen des Verkleidungsteils an dem Kraftfahrzeug auf. Auch hiermit wird ermöglicht, das Verkleidungsteil flexibel an allen Außenflächen des Kraftfahrzeugs temporär außerhalb der Gebrauchslage anzubringen.

Erfindungsgemäss ist das Verkleidungsteil als
ein Außenverkleidungsteil des Kraftfahrzeugs ausgebildet. Alternativ oder zusätzlich ist das Verkleidungsteil als ein Fahrzeugfrontverkleidungsteil, ein Fahrzeugheckverkleidungsteil, ein Fahrzeugdachverkleidungsteil, ein Fahrzeugbodenverkleidungsteil und/oder ein Fahrzeugseitenverkleidungsteil ausgebildet. Damit sind die Prinzipien der vorliegenden Offenbarung auf alle denkbaren Verkleidungsteile eines Kraftfahrzeugs anwendbar.

In einem Ausführungsbeispiel sind der erste Anbringungsbereich und der zweite Anbringungsbereich beabstandet zueinander.

In einem bevorzugten Ausführungsbeispiel ist das Verkleidungsteil dazu ausgebildet, in der Gebrauchslage ein vollständiges Herausziehen eines Steckbolzens aus einem Fangmaul, insbesondere an einem Stoßfänger, des Kraftfahrzeugs zu blockieren. Damit kann das Verkleidungsteil im normalen Fahrbetrieb des Kraftfahrzeugs zum optischen Aufwerten des Stoßfängers des Kraftfahrzeugs verwendet werden, ohne dass die Zugänglichkeit zu dem Steckbolzen und dem Fangmaul, wenn erforderlich, beeinträchtigt wird.

Insbesondere kann das Verkleidungsteil mittels des ersten Anbringungsbereichs an einer Verkleidungsstrebe, insbesondere in einer Aufnahme der Verkleidungsstrebe, eines Stoßfängers des Kraftfahrzeugs anbringbar sein.

Vorzugsweise kann das Verkleidungsteil mittels des zweiten Anbringungsbereichs an einem Stoßfänger des Kraftfahrzeugs, insbesondere beabstandet zu der Verkleidungsstrebe und/oder der Aufnahme der Verkleidungsstrebe, anbringbar sein.

Die vorliegende Offenbarung betrifft auch ein Kraftfahrzeug, insbesondere Nutzfahrzeug, zum Beispiel Lastkraftwagen, mit einem Verkleidungsteil wie hierin offenbart.

In einem Ausführungsbeispiel weist das Kraftfahrzeug ein Fangmaul (z. B. an einem Stoßfänger, beispielsweise Frontstoßfänger, eines Kraftfahrzeugs) zum Ankoppeln einer Deichsel (zum Beispiel eines Anhängers) auf. Das Kraftfahrzeug weist einen Steckbolzen auf, der in das Fangmaul (Zugmaul) einsteckbar und aus dem Fangmaul herausziehbar ist. In der Gebrauchslage ist das Verkleidungsteil oberhalb des Fangmauls angeordnet und/oder blockiert ein vollständiges Herausziehen des Steckbolzens aus dem Fangmaul.

Vorzugsweise kann das Fangmaul hinter einem bewegbaren, insbesondere verschiebbaren, Kennzeichenhalter des Kraftfahrzeugs angeordnet sein. Damit ist das Fangmaul, wenn es nicht genutzt wird, hinter dem Kennzeichenhalter nicht sichtbar und beeinträchtigt ein Aussehen des Kraftfahrzeugs nicht.

Die vorliegende Offenbarung betrifft auch eine Verwendung eines Verkleidungsteils wie hierin offenbart oder eines Kraftfahrzeugs wie hierin offenbart. Die Verwendung weist das Entnehmen des Verkleidungsteils aus der Gebrauchslage in oder an dem Kraftfahrzeug durch Lösen des ersten Anbringungsbereichs von dem Kraftfahrzeug auf. Die Verwendung weist das Anbringen des Verkleidungsteils in oder an dem Kraftfahrzeug außerhalb der Gebrauchslage mittels des zweiten Anbringungsbereichs auf, wodurch ein Funktionsbauteil und/oder ein Zugang zu dem Funktionsbauteil, insbesondere ein Steckbolzen in einem Fangmaul des Kraftfahrzeugs, freigegeben wird.

Insbesondere kann die Verwendung zusätzlich das bestimmungsgemäße Verwenden des Funktionsbauteils, insbesondere Herausziehen des Steckbolzens aus dem Fangmaul und Einstecken des Steckbolzens in das Fangmaul, aufweisen.

Vorzugsweise kann die Verwendung zusätzlich das Lösen des mittels des zweiten Anbringungsbereichs am Kraftfahrzeug angebrachten Verkleidungsteils und das Anbringen des Verkleidungsteils in der Gebrauchslage mittels des ersten Anbringungsbereichs aufweisen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Vorderansicht eines Stoßfängers eines Nutzfahrzeugs, mit einem beispielhaften Verkleidungsteil in einer Gebrauchslage;
- Figur 2: eine weitere perspektivische Vorderansicht des Stoßfängers ohne das beispielhafte Verkleidungsteil;
- Figur 3: eine weitere perspektivische Vorderansicht des Stoßfängers mit dem beispielhaften Verkleidungsteil, das temporär außerhalb der Gebrauchslage gesichert ist;
- Figur 4: eine weitere perspektivische Vorderansicht des Stoßfängers mit dem beispielhaften Verkleidungsteil, das temporär außerhalb der Gebrauchslage gesichert ist;
- Figur 5: eine weitere perspektivische Vorderansicht des Stoßfängers mit einem abgeklappten Kennzeichenhalter und dem beispielhaften Verkleidungsteil, das temporär außerhalb der Gebrauchslage gesichert ist;
- Figur 6: eine weitere perspektivische Vorderansicht des Stoßfängers mit einem abgeklappten Kennzeichenhalter, entnommenem Steckbolzen und dem beispielhaften Verkleidungsteil, das temporär außerhalb der Gebrauchslage gesichert ist;
- Figur 7: eine perspektivische Vorderansicht des Verkleidungsteils gemäß einem ersten Ausführungsbeispiel;
- Figur 8: eine perspektivische Vorderansicht des Verkleidungsteils gemäß einem zweiten Ausführungsbeispiel; und
- Figur 9: eine perspektivische Vorderansicht des Verkleidungsteils gemäß einem dritten Ausführungsbeispiel.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

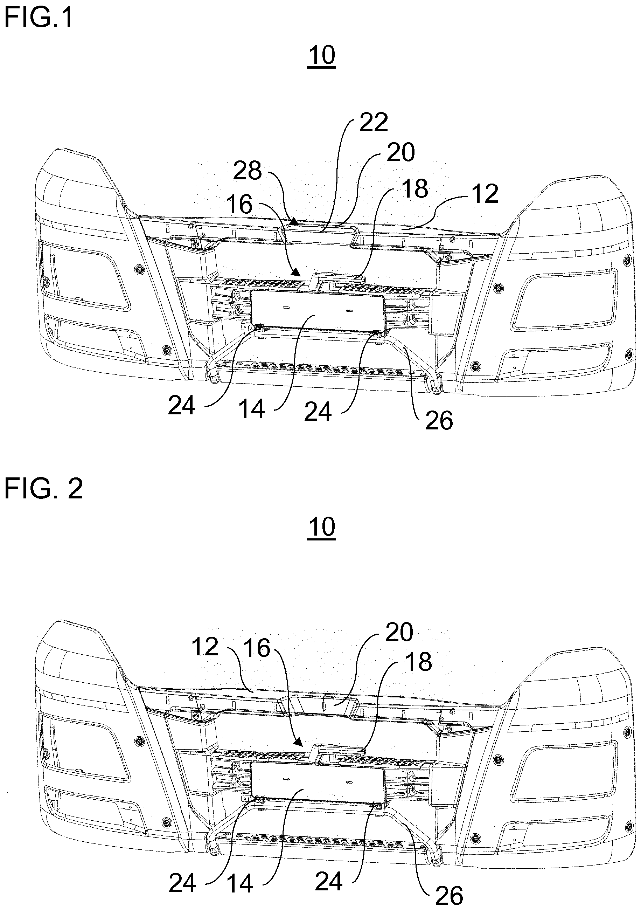

Die Figuren 1 bis 6 zeigen einen Stoßfänger 10 eines Kraftfahrzeugs, insbesondere eines Nutzfahrzeugs. Das Nutzfahrzeug kann beispielsweise als ein Lastkraftwagen ausgebildet sein. Der Stoßfänger 10 kann insbesondere an einer Fahrzeugfront des Kraftfahrzeugs vorgesehen sein.

Der Stoßfänger 10 weist eine Verkleidungsstrebe 12, einen Kennzeichenhalter 14, ein Fangmaul 16 und einen (Vor-) Steckbolzen 18 auf. In den Figuren 1 bis 4 ist das Fangmaul 16 vollständig und der Steckbolzen 18 teilweise von dem Kennzeichenhalter 14 verdeckt.

Die Verkleidungsstrebe 12 ist oberhalb des Kennzeichenhalters 14 und des Fangmauls 16 angeordnet. Die Verkleidungsstrebe 12 ist als eine Querstrebe ausgebildet. Die Verkleidungsstrebe 12 ist insbesondere ein Designbauteil und dient vornehmlich zur Zierde des Stoßfängers 10.

Wie in Figur 1 beispielhaft dargestellt ist, weist die Verkleidungsstrebe 12 eine Aufnahme 20 und ein Verkleidungsteil 22 auf.

Das Verkleidungsteil 22 ist als eine Zierabdeckung ausgebildet. Das Verkleidungsteil 22 ist entnehmbar in der Aufnahme 20 angebracht bzw. befestigt. Das Verkleidungsteil 22 und die Aufnahme 20 sind mittig in der Verkleidungsstrebe 12 angeordnet. Das Verkleidungsteil 22 und die Aufnahme 20 sind in einer Vertikalrichtung gesehen direkt oberhalb des Fangmauls 16 angeordnet.

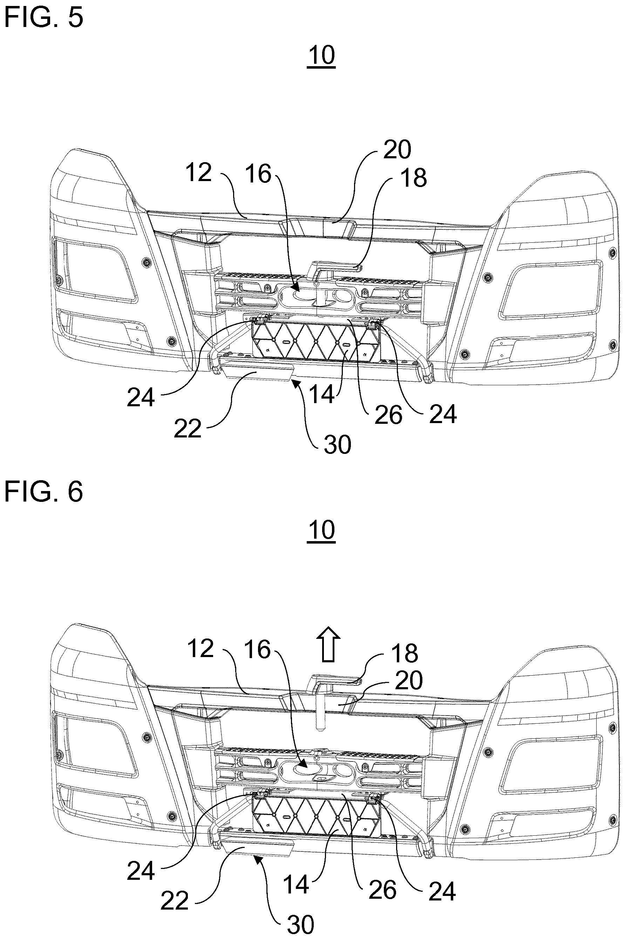

Der Kennzeichenhalter 14 dient zum Halten eines Kfz-Kennzeichens (nicht dargestellt). Der Kennzeichenhalter 14 ist mittels zweier Scharniere 24 verschwenkbar an einem Rahmenbauteil 26 des Stoßfängers 10 angebracht. In den Figuren 1 bis 4 ist der Kennzeichenhalter 14 in einer Gebrauchslage dargestellt, in der der Kennzeichenhalter 14 ein Kfz-Kennzeichen sichtbar halten kann. In der Gebrauchslage verdeckt der Kennzeichenhalter 14 das Fangmaul 16. Mittels der Scharniere 24 kann der Kennzeichenhalter 14 nach unten verschwenkt werden. In den Figuren 5 und 6 ist der Kennzeichenhalter in einer nach unten geschwenkten Lage dargestellt. In der nach unten geschwenkten Lage gibt der Kennzeichenhalter 14 einen Zugang zu dem Fangmaul 16 frei.

Das Fangmaul 16 ist hinter dem Kennzeichenhalter 14 angeordnet. Mittels des Fangmauls 16 kann beispielsweise eine Deichsel, zum Beispiel eine Anhängerdeichsel eines Anhängers, oder ein Seil an dem Stoßfänger 10 befestigt werden. Beispielsweise kann es zum besseren Rangieren eines Anhängers notwendig sein, die Anhängerdeichsel vorne an dem Stoßfänger 10 des Kraftfahrzeugs zu befestigen, um den Anhänger zu ziehen oder zu schieben. Es ist auch möglich, dass das Kraftfahrzeug beispielsweise mittels eines Abschleppseils, das im Fangmaul 16 befestigt ist, abgeschleppt wird.

Um beispielsweise die Deichsel oder das Seil in dem Fangmaul 16 zu befestigen, muss der Steckbolzen 18 zunächst aus dem Fangmaul 16 entnommen werden. Der Steckbolzen 18 ist in einer Horizontalrichtung in dem Fangmaul 16, insbesondere in Vertikalbohrungen des Fangmauls 16, gesichert. Typischerweise wird der Steckbolzen 18 bei der Entnahme aus dem Fangmaul 16 nach oben aus dem Fangmaul 16 gezogen. In der Gebrauchslage des Verkleidungsteils 22 (siehe Figur 1) kann der Steckbolzen 18 nicht vollständig aus dem Fangmaul 16 gezogen werden. Um den Steckbolzen 18 aus dem Fangmaul 16 zu ziehen, muss das Verkleidungsteil 22 daher aus der Aufnahme 20 der Verkleidungsstrebe 12 entnommen werden (siehe Figur 2).

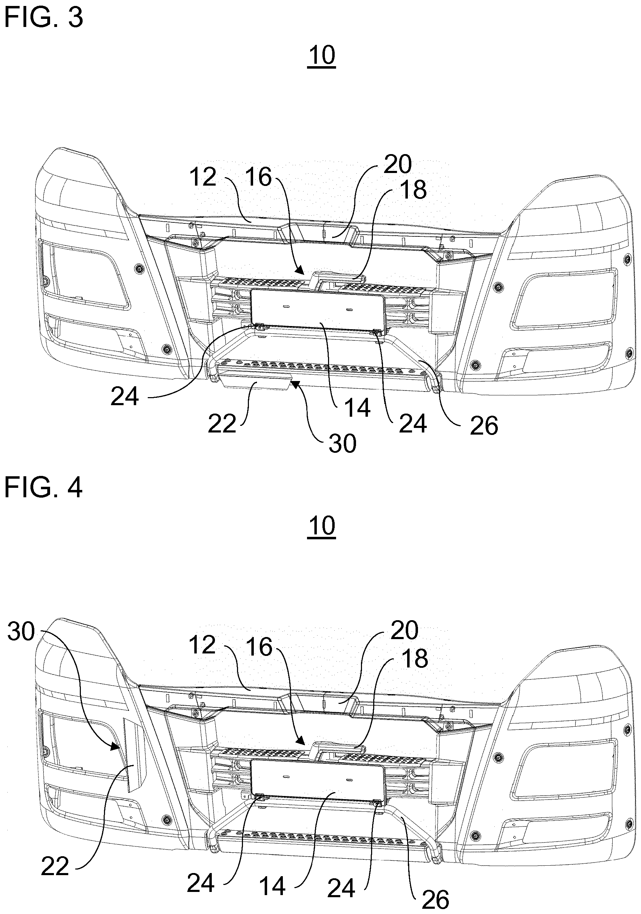

Die vorliegende Offenbarung schlägt vor, dass das Verkleidungsteil 22 einen ersten Anbringungsbereich 28 und einen zweiten Anbringungsbereich 30 aufweist (nur schematisch in den Figuren 1, 3 bis 6 angedeutet). Der erste Anbringungsbereich 28 und der zweite Anbringungsbereich 30 können beabstandet zueinander sein. Mittels des ersten Anbringungsbereichs 28 kann das Verkleidungsteil 22 lösbar an der Verkleidungsstrebe 12 befestigt werden (siehe Figur 1). Der zweite Anbringungsbereich 30 wiederum ermöglicht eine lösbare, insbesondere nicht-mechanische, Befestigung des Verkleidungsteils 22 an einer Fläche des Stoßfängers 10 des Kraftfahrzeugs außerhalb der Gebrauchslage (siehe Figuren 3 bis 6). Damit kann das Verkleidungsteil 22 temporär an dem Stoßfänger 10 angebracht werden, wenn der Steckbolzen 18 entfernt werden soll. Somit hat der Benutzer die Hände frei, um den Koppelvorgang der Deichsel oder des Seils mit dem Fangmaul 16 durchzuführen. Das Verkleidungsteil 22 muss somit nicht am Boden abgelegt werden, wo es verschmutzen, vergessen oder beschädigt werden kann. Es ist auch nicht notwendig, das Verteilungsbauteil 22 beim Koppelvorgang in der Hand zu behalten oder beispielsweise mit in das Fahrerhaus des Kraftfahrzeugs zu nehmen.

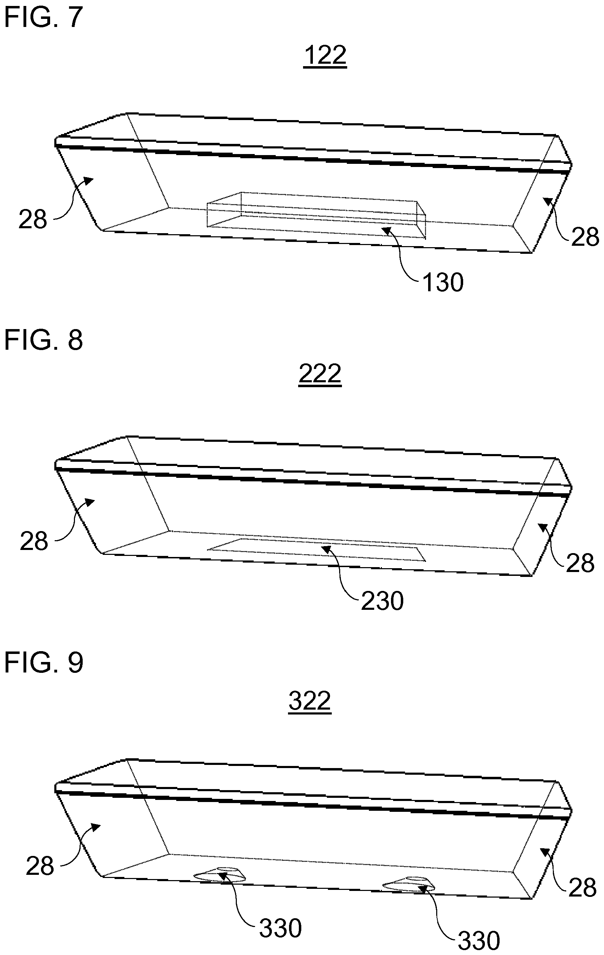

Die Figuren 7 bis 9 zeigen verschiedene Ausführungsbeispiele für das Verkleidungsteil 22.

Die Figur 7 zeigt ein erstes Ausführungsbeispiel für ein Verkleidungsteil 122.

Das Verkleidungsteil 122 weist den ersten Anbringungsbereich 28 auf, der zum Klemmen des Kraftfahrzeugs in die Aufnahme 20 (siehe beispielsweise Figur 1) ausgebildet ist. Insbesondere kann der erste Anbringungsbereich 28 durch zwei auf entgegengesetzten Seiten des Verkleidungsteils 22 angeordnete, schräg zulaufend Flächen gebildet sein, über die das Verkleidungsteil in die Aufnahme 20 geklemmt werden kann. Es ist auch möglich, dass der erste Anbringungsbereich 28 bspw. über eine alternative oder zusätzliche mechanische Befestigung, z. B. eine Rastverbindung, eine Schraubverbindung usw., an der Verkleidungsstrebe 12 angebracht ist.

Das Verkleidungsteil 122 weist zudem einen zweiten Anbringungsbereich 130 auf. Der zweite Anbringungsbereich 130 ist als ein Magnet ausgebildet. Der Magnet kann beispielsweise in einer Ausnehmung des Verkleidungsteils 122 aufgenommen sein. Die Ausnehmung kann insbesondere an einer Unterseite und einer Rückseite des Verkleidungsteils 122 vorgesehen sein. Damit kann das Verkleidungsteil 122 außerhalb der Gebrauchslage an metallischen Elementen des Stoßfängers 10 angebracht werden, um eine Entnahme des Steckbolzens 18 zu ermöglichen.

Die Figur 8 zeigt ein zweites Ausführungsbeispiel für ein Verkleidungsteil 222.

Das Verkleidungsteil 222 weist erneut den ersten Anbringungsbereich 28 auf. Das Verkleidungsteil 222 weist zusätzlich einen zweiten Anbringungsbereich 230 auf. Der zweite Anbringungsbereich 230 ist als eine (lösbare) Klebefolie ausgebildet. Die Klebefolie kann beispielsweise an einer Unterseite oder einer Rückseite des Verkleidungsteils 222 vorgesehen sein. Damit kann das Verkleidungsteil 222 außerhalb der Gebrauchslage stoffschlüssig an Außenflächen des Stoßfängers 10 angeklebt werden, um eine Entnahme des Steckbolzens 18 zu ermöglichen.

Die Figur 9 zeigt ein drittes Ausführungsbeispiel für ein Verkleidungsteil 322.

Das Verkleidungsteil 322 weist erneut den ersten Anbringungsbereich 28 auf. Das Verkleidungsteil 322 weist zusätzlich einen zweiten Anbringungsbereich 330 auf. Der zweite Anbringungsbereich 330 ist durch zwei Saugnäpfe gebildet. Die Saugnäpfe können beispielsweise an einer Unterseite oder einer Rückseite des Verkleidungsteils 322 vorgesehen sein. Mittels der Saugnäpfe kann das Verkleidungsteil 322 außerhalb der Gebrauchslage an Außenflächen des Stoßfängers 10 angebracht werden, um eine Entnahme des Steckbolzens 18 zu ermöglichen.

In den Figuren 3 bis 6 ist beispielhaft gezeigt, an welchen Stellen das Verkleidungsteil 22 außerhalb der Gebrauchslage, die in Figur 1 gezeigt, an dem Stoßfänger 10 lösbar angebracht werden kann.

Wie in den Figuren 5 und 6 dargestellt ist, kann, nachdem das Verkleidungsteil 22 lösbar am Stoßfänger 10 außerhalb seiner Gebrauchslage (außerhalb der Aufnahme 20) angebracht wurde, der Steckbolzen 18 aus dem Fangmaul 16 entnommen werden. Der hierzu erforderliche Platz wird durch die Aufnahme 20 bereitgestellt. Danach kann eine Befestigungsöffnung oder eine Schlaufe bspw. einer Anhängerdeichsel oder eines Abschleppseils in das Fangmaul 16 eingeführt werden (nicht dargestellt). Der Steckbolzen 18 kann dann erneut in das Fangmaul 16 eingesteckt werden, wobei der Steckbolzen 18 gleichzeitig in die Befestigungsöffnung oder die Schlaufe eingesteckt bzw. eingefädelt wird.

Das Ankoppeln eines Anhängers an das Fangmaul 16 des Stoßfängers 10 kann beispielhaft somit wie folgt erfolgen. Der Fahrer des Kraftfahrzeugs manövriert das Kraftfahrzeug möglichst dicht an die Anhängerdeichsel des Anhängers, zum Beispiel bis zu einem Abstand von 30 cm. Der Fahrer verlässt das Fahrerhaus. Der Fahrer entnimmt das Verkleidungsteil 22 aus dessen Gebrauchslage in der Verkleidungsstrebe 12. Der Fahrer bringt das Verkleidungsteil 22 über den zweiten Anbringungsbereich 30 an einer Außenfläche des Stoßfängers 10 temporär lösbar an. Der Fahrer klappt den Kennzeichenhalter 14 nach unten. Der Fahrer entnimmt den Steckbolzen 18 aus dem Fangmaul 16 und kehrt zurück in das Fahrerhaus des Kraftfahrzeugs. Der Fahrer fährt das Kraftfahrzeug weiter in Richtung zu der Anhängerdeichsel, bis die Befestigungsöffnung der Anhängerdeichsel innerhalb des Fangmauls 16 positioniert ist. Der Fahrer verlässt das Fahrerhaus, steckt den Steckbolzen 18 zurück in das Fangmaul 16 und sichert damit die Anhängerdeichsel im Fangmaul 16. Der Fahrer kann nun den Anhänger wie gewünscht mit dem Kraftfahrzeug rangieren, anschließend die Anhängerdeichsel abkoppeln und das Verkleidungsteil 22 zurück in dessen Gebrauchslage anzubringen. Es ist auch möglich, dass das Verkleidungsteil 22 während des Rangierens des Anhängers in dessen Gebrauchslage angebracht wird.

Die vorliegende Offenbarung ist jedoch nicht auf das hierin offenbarte, besonders bevorzugte Ausführungsbeispiel mit dem Verkleidungsteil 22 beschränkt. Es wird darauf hingewiesen, dass das zugrunde liegende Konzept mit den zwei Anbringungsbereichen an einem Verkleidungsteil zur lösbaren Befestigung in einer Gebrauchslage und außerhalb einer Gebrauchslage auch bei einem anderen Verkleidungsteil verwendet werden kann. Das Verkleidungsteil kann beispielsweise ein Innenverkleidungsteil oder ein Außenverkleidungsteil eines Kraftfahrzeugs sein. Das Außenverkleidungsteil kann beispielsweise ein Fahrzeugfrontverkleidungsteil, ein Fahrzeugheckverkleidungsteil, ein Fahrzeugdachverkleidungsteil, ein Fahrzeugbodenverkleidungsteil oder ein Fahrzeugseitenverkleidungsteil sein. Das Verkleidungsteil kann in dessen Gebrauchslage mittels des ersten Anbringungsbereichs an dem Kraftfahrzeug lösbar befestigt sein. In der Gebrauchslage kann das Verkleidungsteil beispielsweise einen Zugang zu einem Funktionsbauteil verdecken oder blockieren, wie hierin beispielhaft für den Steckbolzen 18 ausgeführt ist. Das Verkleidungsteil kann dann außerhalb von dessen Gebrauchslage lösbar an dem Kraftfahrzeug mittels des zweiten Anbringungsbereichs beispielsweise magnetisch, über Saugnäpfe oder mittels einer lösbare Klebefolie angebracht werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Stoßfänger
- 12: Verkleidungsstrebe
- 14: Kennzeichenhalter
- 16: Fangmaul
- 18: Steckbolzen
- 20: Aufnahme
- 22: Verkleidungsteil
- 24: Scharnier
- 26: Rahmenbauteil
- 28: Erster Anbringungsbereich
- 30: Zweiter Anbringungsbereich
- 122: Verkleidungsteil
- 130: Zweiter Anbringungsbereich
- 222: Verkleidungsteil
- 230: Zweiter Anbringungsbereich
- 322: Verkleidungsteil
- 330: Zweiter Anbringungsbereich

## Patentansprüche

1. Verkleidungsteil (22) für ein Kraftfahrzeug, insbesondere Nutzfahrzeug, aufweisend:
einen ersten Anbringungsbereich (28), der dazu ausgebildet ist, das Verkleidungsteil (22) abnehmbar an dem Kraftfahrzeug in einer Gebrauchslage anzubringen, wobei das Verkleidungsteil (22) als ein Außenverkleidungsteil des Kraftfahrzeugs ausgebildet ist; und
einen zweiten Anbringungsbereich (30), der separat zum ersten Anbringungsbereich (28) vorgesehen und dazu ausgebildet ist, das Verkleidungsteil (22) abnehmbar an dem Kraftfahrzeug zum temporären Sichern des Verkleidungsteils (22) außerhalb der Gebrauchslage anzubringen.

2. Verkleidungsteil (22) nach Anspruch 1, wobei:
der zweite Anbringungsbereich (30) dazu ausgebildet ist, das Verkleidungsteil (22) frei positionierbar oder variabel positionierbar an dem Kraftfahrzeug, insbesondere einem Stoßfänger (10) des Kraftfahrzeugs, anzubringen.

3. Verkleidungsteil (22) nach Anspruch 1 oder Anspruch 2, wobei:
der erste Anbringungsbereich (28) dazu ausgebildet ist, das Verkleidungsteil (22) mechanisch, insbesondere mittels einer formschlüssigen, kraftschlüssigen und/oder reibschlüssigen, mechanischen Verbindung, an dem Kraftfahrzeug anzubringen.

4. Verkleidungsteil (22) nach einem der vorherigen Ansprüche, wobei:
das Verkleidungsteil (22) als eine Zierblende oder eine Zierabdeckung ausgebildet ist.

5. Verkleidungsteil (22) nach einem der vorherigen Ansprüche, wobei:
das Verkleidungsteil (22) dazu ausgebildet ist, in der Gebrauchslage ein Funktionsbauteil (18) des Kraftfahrzeugs und/oder einen Zugang zu einem Funktionsbauteil (18) des Kraftfahrzeugs zumindest teilweise zu verdecken und/oder zumindest teilweise zu blockieren.

6. Verkleidungsteil (122) nach einem der vorherigen Ansprüche, wobei:
der zweite Anbringungsbereich (130) einen Magneten zum magnetischen Anheften des Verkleidungsteils (22) an dem Kraftfahrzeug aufweist.

7. Verkleidungsteil (222) nach einem der vorherigen Ansprüche, wobei:
der zweite Anbringungsbereich (230) dazu ausgebildet ist, das Verkleidungsteil (22) stoffschlüssig mit dem Kraftfahrzeug zu verbinden.

8. Verkleidungsteil (222) nach einem der vorherigen Ansprüche, wobei:
der zweite Anbringungsbereich (230) eine Klebefolie zum lösbaren Ankleben des Verkleidungsteils (22) an dem Kraftfahrzeug aufweist.

9. Verkleidungsteil (322) nach einem der vorherigen Ansprüche, wobei:
der zweite Anbringungsbereich (330) mindestens einen Saugnapf zum lösbaren Anbringen des Verkleidungsteils (22) an dem Kraftfahrzeug aufweist.

10. Verkleidungsteil (22) nach einem der vorherigen Ansprüche, wobei:
das Verkleidungsteil (22) als ein Fahrzeugfrontverkleidungsteil, ein Fahrzeugheckverkleidungsteil, ein Fahrzeugdachverkleidungsteil, ein Fahrzeugbodenverkleidungsteil oder ein Fahrzeugseitenverkleidungsteil ausgebildet ist.

11. Verkleidungsteil (22) nach einem der vorherigen Ansprüche, wobei:
der erste Anbringungsbereich (28) und der zweite Anbringungsbereich (30) beabstandet zueinander sind.

12. Verkleidungsteil (22) nach einem der vorherigen Ansprüche, wobei:
das Verkleidungsteil (22) dazu ausgebildet ist, in der Gebrauchslage ein vollständiges Herausziehen eines Steckbolzens (18) aus einem Fangmaul (16), insbesondere an einem Stoßfänger (10), des Kraftfahrzeugs zu blockieren.

13. Kraftfahrzeug, insbesondere Nutzfahrzeug, mit einem Verkleidungsteil (22) nach einem der vorherigen Ansprüche.

14. Kraftfahrzeug nach Anspruch 13, ferner aufweisend:
ein Fangmaul (16) zum Ankoppeln einer Deichsel; und
einen Steckbolzen (18), der in das Fangmaul (16) einsteckbar und aus dem Fangmaul (16) herausziehbar ist,
wobei das Verkleidungsteil (22) in der Gebrauchslage oberhalb des Fangmauls (16) angeordnet ist und/oder ein vollständiges Herausziehen des Steckbolzens (18) aus dem Fangmaul (16) blockiert.

15. Verwendung eines Verkleidungsteils (22) nach einem der Ansprüche 1 bis 12 oder eines Kraftfahrzeugs nach Anspruch 13 oder Anspruch 14, aufweisend:
Entnehmen des Verkleidungsteils (22) aus der Gebrauchslage in oder an dem Kraftfahrzeug durch Lösen des ersten Anbringungsbereichs (28) von dem Kraftfahrzeug; und
Anbringen des Verkleidungsteils (22) in oder an dem Kraftfahrzeug außerhalb der Gebrauchslage mittels des zweiten Anbringungsbereichs (30), wodurch ein Funktionsbauteil (18) und/oder ein Zugang zu dem Funktionsbauteil (18), insbesondere ein Steckbolzen (18) in einem Fangmaul (16) des Kraftfahrzeugs, freigegeben wird.

## Claims

1. A trim part (22) for a motor vehicle, in particular commercial vehicle, having:
a first attachment region (28) which is designed to attach the trim part (22) detachably to the motor vehicle in a use position, wherein the trim part (22) is designed as an outside trim part of the motor vehicle; and
a second attachment region (30) which is provided separately from the first attachment region (28) and is designed to attach the trim part (22) detachably to the motor vehicle for temporarily securing the trim part (22) outside the use position.

2. The trim part (22) according to Claim 1, wherein: the second attachment region (30) is designed to attach the trim part (22) in a freely positionable or variably positionable manner to the motor vehicle, in particular to a bumper (10) of the motor vehicle.

3. The trim part (22) according to Claim 1 or Claim 2, wherein:
the first attachment region (28) is designed to attach the trim part (22) mechanically, in particular by means of a form-fitting, force-fitting and/or frictionally locking, mechanical connection, to the motor vehicle.

4. The trim part (22) according to one of the preceding claims, wherein:
the trim part (22) is in the form of a decorative panel or a decorative covering.

5. The trim part (22) according to one of the preceding claims, wherein:
the trim part (22) is designed in order, in the use position, to at least partially conceal and/or to at least partially block a functional component (18) of the motor vehicle and/or access to a functional component (18) of the motor vehicle.

6. The trim part (122) according to one of the preceding claims, wherein:
the second attachment region (130) has a magnet for magnetically affixing the trim part (22) to the motor vehicle.

7. The trim part (222) according to one of the preceding claims, wherein:
the second attachment region (230) is designed to connect the trim part (22) in an integrally bonded manner to the motor vehicle.

8. The trim part (222) according to one of the preceding claims, wherein:
the second attachment region (230) has an adhesive film for the releasable adhesive bonding of the trim part (22) to the motor vehicle.

9. The trim part (322) according to one of the preceding claims, wherein:
the second attachment region (330) has at least one suction cup for releasably attaching the trim part (22) to the motor vehicle.

10. The trim part (22) according to one of the preceding claims, wherein:
the trim part (22) is in the form of a vehicle front trim part, a vehicle rear trim part, a vehicle roof trim part, a vehicle floor trim part or a vehicle side trim part.

11. The trim part (22) according to one of the preceding claims, wherein:
the first attachment region (28) and the second attachment region (30) are spaced apart from each other.

12. The trim part (22) according to one of the preceding claims, wherein:
the trim part (22) is designed in order, in the use position, to block complete pulling of a locking bolt (18) out of a coupling jaw (16), in particular on a bumper (10), of the motor vehicle.

13. A motor vehicle, in particular commercial vehicle, with a trim part (22) according to one of the preceding claims.

14. The motor vehicle according to Claim 13, furthermore having:
a coupling jaw (16) for the coupling of a tow bar; and
a locking bolt (18) which can be plugged into the coupling jaw (16) and can be pulled out of the coupling jaw (16),
wherein the trim part (22) in the use position is arranged above the coupling jaw (16) and/or blocks complete pulling of the locking bolt (18) out of the coupling jaw (16).

15. The use of a trim part (22) according to one of Claims 1 to 12 or of a motor vehicle according to Claim 13 or Claim 14, comprising:
removing the trim part (22) from the use position in or on the motor vehicle by releasing the first attachment region (28) from the motor vehicle; and attaching the trim part (22) in or on the motor vehicle outside the use position by means of the second attachment region (30), as a result of which a functional component (18) and/or access to the functional component (18), in particular a locking bolt (18) in a coupling jaw (16) of the motor vehicle, is unblocked.

## Revendications

1. Partie d'habillage (22) pour un véhicule automobile, notamment un véhicule utilitaire, comprenant :
une première zone d'application (28), qui est configurée pour appliquer la partie d'habillage (22) de manière amovible sur le véhicule automobile dans une position d'utilisation, la partie d'habillage (22) étant configurée sous la forme d'une partie d'habillage extérieure du véhicule automobile ; et
une deuxième zone d'application (30), qui est prévue séparément de la première zone d'application (28) et qui est configurée pour appliquer la partie d'habillage (22) de manière amovible sur le véhicule automobile pour la sécurisation temporaire de la partie d'habillage (22) à l'extérieur de la position d'utilisation.

2. Partie d'habillage (22) selon la revendication 1, dans laquelle :
la deuxième zone d'application (30) est configurée pour appliquer la partie d'habillage (22) de manière librement positionnable ou variablement positionnable sur le véhicule automobile, notamment un pare-chocs (10) du véhicule automobile.

3. Partie d'habillage (22) selon la revendication 1 ou la revendication 2, dans laquelle :
la première zone d'application (28) est configurée pour appliquer la partie d'habillage (22) mécaniquement, notamment au moyen d'une liaison mécanique par accouplement de forme, par accouplement de force et/ou par friction, sur le véhicule automobile.

4. Partie d'habillage (22) selon l'une quelconque des revendications précédentes, dans laquelle :
la partie d'habillage (22) est configurée en tant que panneau décoratif ou recouvrement décoratif.

5. Partie d'habillage (22) selon l'une quelconque des revendications précédentes, dans laquelle :
la partie d'habillage (22) est configurée pour recouvrir au moins partiellement et/ou bloquer au moins partiellement dans la position d'utilisation un composant fonctionnel (18) du véhicule automobile et/ou un accès à un composant fonctionnel (18) du véhicule automobile.

6. Partie d'habillage (122) selon l'une quelconque des revendications précédentes, dans laquelle :
la deuxième zone d'application (130) comprend un aimant pour l'adhésion magnétique de la partie d'habillage (22) sur le véhicule automobile.

7. Partie d'habillage (222) selon l'une quelconque des revendications précédentes, dans laquelle :
la deuxième zone d'application (230) est configurée pour relier la partie d'habillage (22) par accouplement de matière avec le véhicule automobile.

8. Partie d'habillage (222) selon l'une quelconque des revendications précédentes, dans laquelle :
la deuxième zone d'application (230) comprend une feuille adhésive pour le collage détachable de la partie d'habillage (22) sur le véhicule automobile.

9. Partie d'habillage (322) selon l'une quelconque des revendications précédentes, dans laquelle :
la deuxième zone d'application (330) comprend au moins une ventouse pour l'application détachable de la partie d'habillage (22) sur le véhicule automobile.

10. Partie d'habillage (22) selon l'une quelconque des revendications précédentes, dans laquelle :
la partie d'habillage (22) est configurée en tant que partie d'habillage frontale de véhicule, partie d'habillage arrière de véhicule, partie d'habillage de toit de véhicule, partie d'habillage de plancher de véhicule ou partie d'habillage latéral de véhicule.

11. Partie d'habillage (22) selon l'une quelconque des revendications précédentes, dans laquelle :
la première zone d'application (28) et la deuxième zone d'application (30) sont espacées l'une de l'autre.

12. Partie d'habillage (22) selon l'une quelconque des revendications précédentes, dans laquelle :
la partie d'habillage (22) est configurée pour bloquer dans la position d'utilisation un retrait complet d'un boulon à clavette (18) d'une bouche d'attelage (16), notamment sur un pare-chocs (10), du véhicule automobile.

13. Véhicule automobile, notamment véhicule utilitaire, muni d'une partie d'habillage (22) selon l'une quelconque des revendications précédentes.

14. Véhicule automobile selon la revendication 13, comprenant en outre :
une bouche d'attelage (16) pour le couplage d'un timon ; et
un boulon à clavette (18), qui est insérable dans la bouche d'attelage (16) et peut être retiré de la bouche d'attelage (16),
dans lequel la partie d'habillage (22) est agencée dans la position d'utilisation au-dessus de la bouche d'attelage (16) et/ou bloque un retrait complet du boulon à clavette (18) de la bouche d'attelage (16).

15. Utilisation d'une partie d'habillage (22) selon l'une quelconque des revendications 1 à 12 ou d'un véhicule automobile selon la revendication 13 ou la revendication 14, comprenant :
l'enlèvement de la partie d'habillage (22) de la position d'utilisation dans ou sur le véhicule automobile par détachement de la première zone d'application (28) du véhicule automobile ; et
l'application de la partie d'habillage (22) dans ou sur le véhicule automobile à l'extérieur de la position d'utilisation au moyen de la deuxième zone d'application (30), ce qui permet de libérer un composant fonctionnel (18) et/ou un accès au composant fonctionnel (18), notamment un boulon à clavette (18) dans une bouche d'attelage (16) du véhicule automobile.
